# EUROPEAN PATENT SPECIFICATION

(11) **EP 4 092 883 B1**
(45) Date of publication and mention of the grant of the patent: **07.10.2026**
(21) Application number: 21741515.7
(22) Date of filing: 08.01.2021
(51) Int. Cl.: H02K 7/18, B60K 17/04, B60K 6/40, B60K 6/405, B60K 6/485, F16H 57/00, F16F 15/10, F16H 57/02, B60K 6/48

(54) **POWER-TRANSMITTING MECHANISM**
ENERGIEÜBERTRAGUNGSMECHANISMUS
MÉCANISME DE TRANSMISSION DE PUISSANCE

(30) Priority: 14.01.2020 JP 2020003765
(43) Date of publication of application: 23.11.2022
(73) Proprietor: KUBOTA CORPORATION, Osaka-shi, Osaka 5568601 (JP)
(72) Inventor: OKAZAKI Kazuto, Sakai-shi, Osaka 5900823 (JP); YAGYU Sumio, Sakai-shi, Osaka 5900823 (JP)
(74) Representative: Cabinet Beau de Loménie
(86) International application number: PCT/JP2021/000427
(87) International publication number: WO 2021/145275

(56) References cited:
- WO-A1-2015/194419
- JP-A- 2002 087 080
- JP-A- 2005 059 788
- JP-A- 2008 126 703
- JP-A- 2010 247 786
- US-A1- 2010 323 804

## Description

### [TECHNICAL FIELD]

The present invention relates to a power transmission mechanism including an electric motor.

### [BACKGROUND ART]

Techniques disclosed in Patent Literatures 1 and 2 are each known as a power transmission mechanism including an electric motor. The techniques disclosed in Patent Literatures 1 and 2 are such that the electric motor is disposed between an engine and a driven machine. More specifically, the technique disclosed in Patent Literature 1 is such that the electric motor is connected to the engine and the driven machine (transmission). The technique disclosed in Patent Literature 2 is such that a damper device is disposed in a power train which transmits power from the engine to the electric motor.

### [CITATION LIST]

### [Patent Literature]

[Patent Literature 1] Japanese Unexamined Patent Application Publication No. 2008-290594
[Patent Literature 2] Japanese Unexamined Patent Application Publication No. 2012-71731
US 2010 323804 A1 discloses, in the opinion of the examining division of the European Patent Office, a power transmission falling within the wording of the pre-characterizing portion of claim 1 and deals with a nested torsional damper for an electric machine.

### [SUMMARY OF INVENTION]

### [TECHNICAL PROBLEM]

However, the technique disclosed in Patent Literature 1 has an issue in that a rotor of the electric motor is susceptible to torque variations of the engine. On the other hand, with the technique disclosed in Patent Literature 2, although torque variations of the engine can be absorbed by the damper device, the technique disclosed in Patent Literature 2 has an issue in that, since the damper device is disposed radially inside the rotor of the electric motor, the outer diameter of the electric motor is large and the electric motor cannot be easily mounted on a vehicle or the like.

The present invention was made in order to solve such issues of the related techniques, and an object thereof is to provide a power transmission mechanism which makes it possible to absorb torque variations of the engine and which can be easily mounted on a vehicle or the like.

### [SOLUTION TO PROBLEM]

This object is solved by the invention as claimed in claim 1. The latter defines a power transmission mechanism for which protection is sought. Below, particular embodiments of the invention as claimed in claim 1 are described:

It is preferable that the power transmission mechanism further include a rotation detector to detect a phase of rotation of the rotor. It is preferable that the engine be disposed on one of opposite sides of the damper in the axial direction. It is preferable that the electric motor and the rotation detector be disposed on the other of the opposite sides of the damper in the axial direction.

It is preferable that the power transmission mechanism further include a bearing which rotatably supports the rotary shaft. It is preferable that the rotary shaft be provided, at an outer periphery thereof, with a torque transmitting part to transmit rotational torque to the rotor. It is preferable that the torque transmitting part include one or more keys or one or more splines.

It is preferable that the power transmission mechanism further include a flywheel housing which houses the flywheel, a motor case which is connected to the flywheel housing, and a transmission case which is connected to the motor case and which houses the transmission. It is preferable that the electric motor be housed such that the electric motor extends from an interior of the motor case to an interior of the transmission case. It is preferable that the rotary shaft extend from an interior of the flywheel housing through the interior of the motor case to the interior of the transmission case.

It is preferable that an end surface of the flywheel that faces the damper be recessed toward an opposite end surface of the flywheel to have a recessed portion. It is preferable that the damper be disposed such that the damper is inserted in the recessed portion.

It is preferable that the damper include an inner section attached to the rotary shaft and an outer section attached to the flywheel. It is preferable that the end surface of the flywheel be recessed in the form of a cylinder to have a first recessed portion. It is preferable that the end surface of the first recessed portion be recessed in the form of a cylinder to have a second recessed portion. It is preferable that the outer section be disposed such that the outer section is inserted in the first recessed portion. It is preferable that the inner section be disposed such that the inner section is inserted in the second recessed portion.

It is preferable that the damper overlap the flywheel housing and the motor case in the axial direction.

It is preferable that the power transmission mechanism further include a bearing which rotatably supports the rotary shaft, and a support cylinder which supports an outer circumferential surface of the bearing. It is preferable that the rotation detector be disposed in an interior space of the support cylinder.

It is preferable that the power transmission mechanism further include a rotor boss having an outer circumferential surface having the rotor attached thereto, and an inner circumferential surface fixed to the rotary shaft. It is preferable that the rotation detector be disposed between an inner circumferential surface of the support cylinder and the outer circumferential surface of the rotor boss.

### [ADVANTAGEOUS EFFECTS OF INVENTION]

The present invention provides a power transmission mechanism which includes a damper disposed between an engine and an electric motor in an axial direction of a rotary shaft that rotates together with a rotor of the electric motor. The power transmission mechanism therefore makes it possible to absorb torque variations of the engine and reduce the outer diameter of the electric motor, and can be easily mounted on a vehicle or the like.

### [BRIEF DESCRIPTION OF DRAWINGS]

FIG. 1 is a cross-sectional view illustrating an embodiment of a power transmission mechanism.
FIG. 2 is an enlarged view of a main part of FIG. 1.
FIG. 3 is an exploded perspective view of a main configuration of the power transmission mechanism.

### [DESCRIPTION OF EMBODIMENTS]

The following description discusses embodiments of a power transmission mechanism according to the present invention with reference to drawings. The power transmission mechanism according to the present invention is for use in, for example, industrial machines such as an agricultural machine (e.g., tractor, mower), a construction machine, a utility vehicle, and an engine generator.

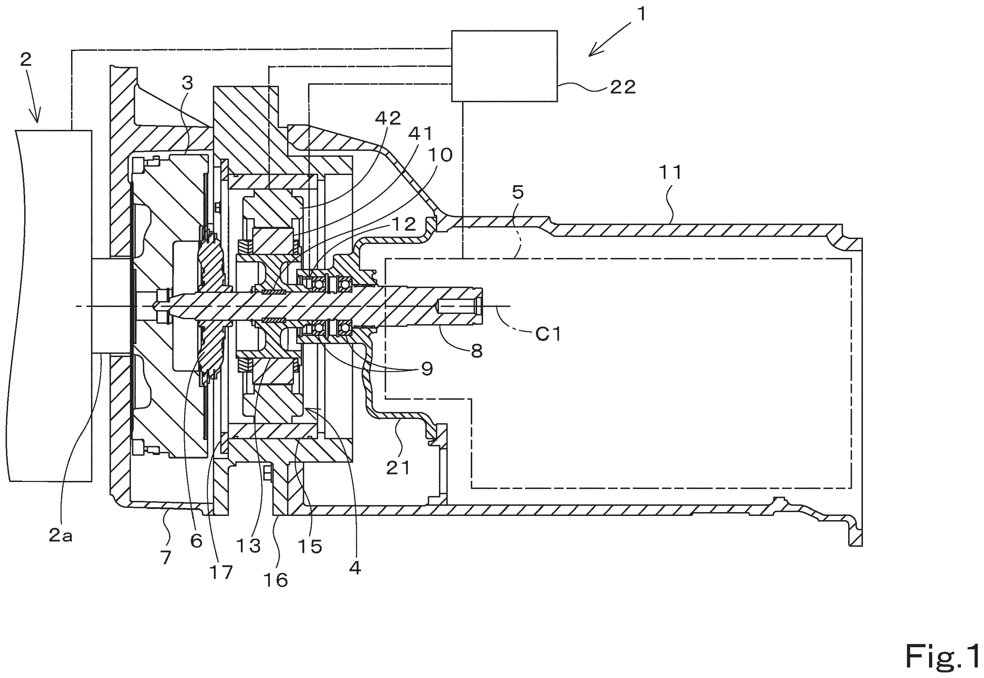

FIG. 1 is a cross-sectional view of an embodiment of a power transmission mechanism 1 according to the present invention.

As illustrated in FIG. 1, the power transmission mechanism 1 includes an engine 2, a flywheel 3, an electric motor 4, a driven machine 5, and a damper 6.

The engine 2 is a diesel engine, a gasoline engine, and/or the like. The engine 2 includes a crankshaft 2a. The crankshaft 2a projects toward the driven machine 5. The crankshaft 2a has the flywheel 3 connected thereto.

The flywheel 3 is substantially in the form of a disc, and is made of a material having a large mass (for example, a metal such as cast iron). The flywheel 3 has, connected to its center, the crankshaft 2a of the engine 2. The flywheel 3 rotates as the crankshaft 2a rotates. The flywheel 3 is housed in a flywheel housing 7.

The electric motor 4 is disposed on the same side of the flywheel 3 as the driven machine 5. The electric motor 4 includes a rotor 41 and a stator 42. The electric motor 4 is, for example, an interior permanent magnet three-phase A.C. synchronous motor, but any other type of synchronous motor may be used. For example, the electric motor 4 may be a synchronous motor in which laminated steel with coil windings is engaged with a rotor 41 or the like. The electric motor 4 may be an A.C. electric motor or a D.C. electric motor. In the present embodiment, the electric motor 4 is a motor/generator which serves also as a generator.

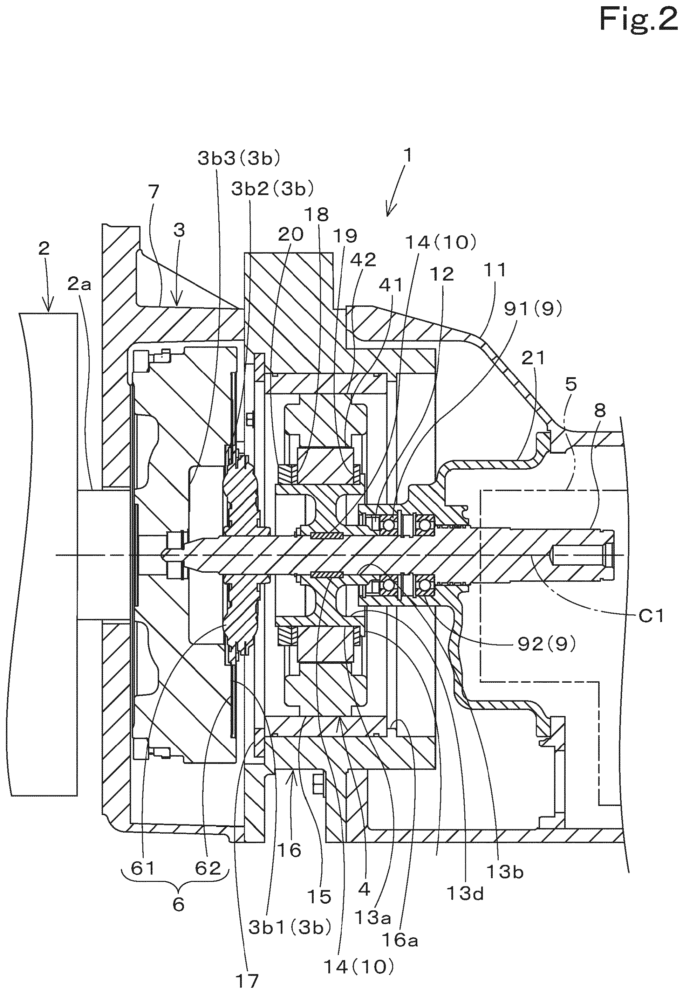

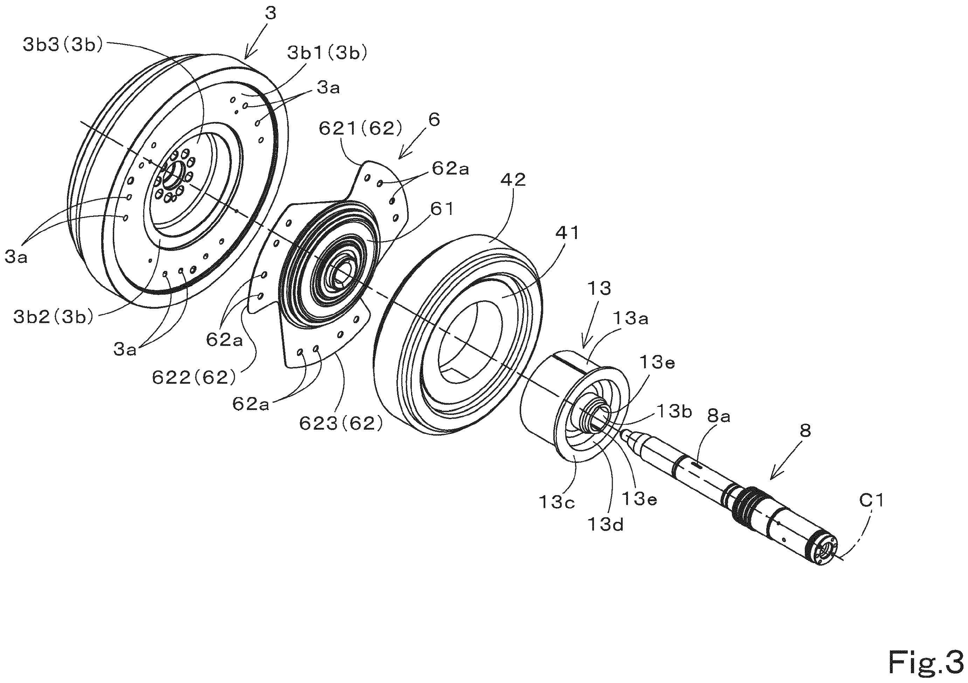

The rotor 41 includes an iron core (such as laminated steel) with a permanent magnet therein. The rotor 41 is in the form of a cylinder, and has its radially inner side fixed to the rotary shaft 8 via a rotor boss 13. As illustrated in FIGS. 2 and 3, the rotor boss 13 is a tubular member having an outer circumferential surface 13a and an inner circumferential surface 13b.

The rotor 41 is attached to the outer circumferential surface 13a of the rotor boss 13. The inner circumferential surface 13b of the rotor boss 13 is fixed to the rotary shaft 8. With this, the rotor 41 rotates together with the rotary shaft 8 about an axis C1 of the rotary shaft 8.

As illustrated in FIGS. 2 and 3, the rotor boss 13 has a flange 13c at its end closer to the driven machine 5. The outer diameter of the flange 13c is greater than the inner diameter of the rotor 41. The end surface of the rotor boss 13 that faces toward the driven machine 5 is recessed toward one end to have a recessed portion 13d.

As illustrated in FIG. 2, a first plate 18 abuts on the end surface of the rotor 41 that faces toward the engine 2. A second plate 19 abuts on the end surface of the rotor 41 that faces toward the driven machine 5. The first plate 18 and the second plate 19 are each in the form of a ring, and engaged with the outer circumferential surface of the rotor boss 13. Furthermore, a ring-shaped collar 20 is engaged with the outer circumferential surface of the rotor boss 13. The collar 20 is located closer to the engine 2 than the first plate 18 is to the engine 2. The first plate 18 is located between the collar 20 and the rotor 41. The second plate 19 is located between the flange 13c and the rotor 41.

The rotary shaft 8 is rotatably supported by at least one bearing 9. The at least one bearing 9 and the rotor 41 are arranged in a direction of the axis C1 of the rotary shaft 8 (hereinafter referred to as "axial direction C1"). The at least one bearing 9 is located closer to the driven machine 5 than the rotor 41 is to the driven machine 5. The at least one bearing 9 is located closer to the driven machine 5 than the rotor boss 13 is to the driven machine 5.

In the following description, one of opposite ends in the axial direction C1 (engine 2 side end) (left end in FIG. 1) is referred to as a "first end", and the other of the opposite ends in the axial direction C1 (driven machine 5 side end) (right end in FIG. 1) is referred to as a "second end". Furthermore, a direction orthogonal to the axial direction C1 and away from the axis C1 is referred to as a "radially outward direction", and a direction orthogonal to the axial direction C1 and toward the axis C1 is referred to as a "radially inward direction".

The rotary shaft 8 has one end portion located closer to the engine 2 side end (the first end), and has the opposite end portion located closer to the driven machine 5 side end (the second end). The one end portion of the rotary shaft 8 overlaps the flywheel 3 in the axial direction C1. The rotary shaft 8 is provided, at an outer periphery thereof, a torque transmitting part 10 which transmits rotational torque to the rotor 41. In the present embodiment, the torque transmitting part 10 includes a key 14 engaged with the outer circumferential surface of the rotary shaft 8. The key 14 is fitted in a recessed portion 8a (see FIG. 3) in the outer circumferential surface of the rotary shaft 8. A plurality of such keys 14 are provided at a plurality of different positions (two positions in the present embodiment) along the circumferential direction of the rotary shaft 8. As illustrated in FIG. 3, the inner circumferential surface of the rotor boss 13 has grooves (keyways) 13e to be engaged with the keys 14. Note that the torque transmitting part 10 is not limited to key(s), and may include, for example, spline(s). In such a case, the inner circumferential surface of the rotor boss 13 has groove(s) for insertion of the spline(s) (spline groove(s)).

The at least one bearing 9 includes a first bearing 91 and a second bearing 92. The first bearing 91 and the second bearing 92 are arranged in the axial direction C1 with a space therebetween. The at least one bearing 9 (the first bearing 91 and the second bearing 92) includes an inner ring attached to the outer circumferential surface of the rotary shaft 8 and an outer ring supported on a support cylinder 21.

The end of the support cylinder 21 that is closer to the second end (the driven machine 5 side end) is fixed to a transmission case 11 (described later). The end of the support cylinder 21 that is closer to the first end (the engine 2 side end) is located within an inner space of a motor case 16 (described later). Furthermore, the end of the support cylinder 21 that is closer to the first end is located in the recessed portion 13d of the rotor boss 13. The support cylinder 21 is a continuous cylinder extending from the interior of the motor case 16 to the interior of the transmission case 11. The support cylinder 21 supports the at least one bearing 9 within the motor case 16.

The power transmission mechanism 1 includes the above-described at least one bearing 9 and torque transmitting part 10, and therefore makes it possible to stabilize the rotation of the rotary shaft 8 and to reliably transmit high rotational torque from the rotary shaft 8 to the rotor 41.

The stator 42 is, for example, made of laminated steel with coil windings. Specifically, the stator 42 has a structure in which teeth project from the inner circumference of an annular yoke, and coils are wrapped around the teeth. The stator 42 is located radially outward of the rotor 41 and faces the rotor 41.

A cooling jacket 15 to cool the electric motor 4 is disposed around the stator 42. In the present embodiment, the cooling jacket 15 is a water jacket 15. The water jacket 15 is in the form of a cylinder and is attached radially outward of the stator 42. The water jacket 15 has an inner passage (not illustrated) to allow passage of cooling fluid.

The electric motor 4 (the rotor 41 and the stator 42) and the water jacket 15 are housed in the motor case 16. The motor case 16 is attached radially outward of the water jacket 15. The motor case 16 is connected to the flywheel housing 7. The interior space of the motor case 16 and the interior space of the flywheel housing 7 are in communication with each other.

As illustrated in FIG. 2, an annular cover member 17 is fixed with bolt(s) and/or the like to the end surface of the motor case 16 that is closer to the first end. The motor case 16 is provided, at its portion closer to the second end, with a protrusion 16a which protrudes in the radially inward direction from the inner circumferential surface of the motor case 16. The water jacket 15 is supported between the cover member 17 and the protrusion 16a.

The driven machine 5 receives power from the engine 2 and/or the electric motor 4, and is driven by the power. In the present embodiment, the driven machine 5 is a transmission which transmits power from the engine 2 to wheels. More specifically, the driven machine 5 is a hydraulic pump of a hydrostatic transmission. The hydraulic pump is connected to the end of the rotary shaft 8 that is closer to the second end. In the following description, the driven machine 5 is referred to as a transmission 5.

As illustrated in FIG. 1, the transmission 5 is housed in the transmission case 11. The transmission case 11 is connected to the motor case 16. The transmission case 11 is connected to the flywheel housing 7 via the motor case 16. With this, the interior space of the transmission case 11, the interior space of the motor case 16, and the interior space of the flywheel housing 7 are in communication with each other.

As illustrated in FIGS. 1 and 2, the electric motor 4 is housed such that the electric motor 4 extends from the interior of the motor case 16 to the interior of the transmission case 11. The rotary shaft 8 extends from the interior of the flywheel housing 7 through the interior of the transmission case 11 to the interior of the transmission case 11. The rotary shaft 8 serves also as an input shaft of the transmission 5. That is, the rotary shaft of the rotor 41 and the input shaft of the transmission 5 are composed of a single, identical shaft. In the present embodiment, the input shaft of the transmission 5 is connected to a hydraulic pump of a hydrostatic transmission.

The damper 6 is connected to the rotary shaft 8 and the flywheel 3. The damper 6 is entirely or partially formed of an elastic or flexible material such as a rubber and/or a resin. As illustrated in FIGS. 2 and 3, the damper 6 includes an inner section 61 and an outer section 62.

The inner section 61 is attached to the rotary shaft 8. Specifically, the inner section 61 is in the form of a cylinder, and its inner circumferential surface is fitted in/on the outer circumferential surface of the rotary shaft 8.

The outer section 62 is attached to the flywheel 3. The outer section 62 is a plate-shaped section thinner than (smaller in dimension along the axial direction C1 than) the inner section 61. The outer section 62 extends in the radially outward directions from the outer circumferential surface of the inner section 61. As illustrated in FIG. 3, the outer section 62 includes a first section 621, a second section 622, and a third section 623. The first section 621, the second section 622, and the third section 623 are arranged at regular intervals along the direction of the circumference of the outer circumferential surface of the inner section 61. The outer section 62 (the first section 621, the second section 622, and the third section 623) has through hole(s) 62a. Bolt(s) (not illustrated) is/are inserted in the through hole(s) 62a of the outer section 62, and the bolt(s) are screwed into threaded hole(s) 3a in the end surface of the flywheel 3 that is closer to the second end. With this, the damper 6 is attached to the surface of the flywheel 3 that is closer to the second end.

As illustrated in FIGS. 2 and 3, the end surface of the flywheel 3 that is closer to the second end is recessed toward the first end to have a recessed portion 3b. The recessed portion 3b includes a first recessed portion 3b1, a second recessed portion 3b2, and a third recessed portion 3b3. The end surface of the flywheel 3 that is closer to the second end is recessed in the form of a cylinder to have the first recessed portion 3b1. The end surface of the first recessed portion 3b1 that is closer to the second end is recessed in the form of a cylinder to have the second recessed portion 3b2. The end surface of the second recessed portion 3b2 that is closer to the second end is recessed in the form of a cylinder to have the third recessed portion 3b3. The first recessed portion 3b1, the second recessed portion 3b2, and the third recessed portion 3b3 are arranged concentrically with each other. The diameter of the second recessed portion 3b2 is smaller than the diameter of the first recessed portion 3b1. The diameter of the third recessed portion 3b3 is smaller than the diameter of the second recessed portion 3b2. The first recessed portion 3b1 has the threaded hole(s) 3a.

As illustrated in FIG. 2, the damper 6 is disposed such that the damper 6 is inserted in the recessed portion 3b of the flywheel 3. Specifically, the outer section 62 of the damper 6 is disposed such that the outer section 62 is inserted in the first recessed portion 3b1. The inner section 61 of the damper 6 is disposed such that the inner section 61 is inserted in the second recessed portion 3b2. This makes it possible to reduce the dimension of an assembly of the flywheel 3 and the damper 6 in the axial direction C1.

As illustrated in FIG. 2, the damper 6 bridges the boundary between the flywheel housing 7 and the motor case 16. That is, the damper 6 is housed such that the damper 6 extends from the interior of the flywheel housing 7 to the interior of the motor case 16. In other words, the damper 6 overlaps the flywheel housing 7 and the motor case 16 in the axial direction C1.

As described earlier, the inner section 61 of the damper 6 is attached to the rotary shaft 8 and the outer section 62 of the damper 6 is attached to the flywheel 3, and thereby the flywheel 3 and the rotary shaft 8 are coupled via the damper 6. Note here that the flywheel 3 and the rotary shaft 8 are not connected directly but coupled via the damper 6. Therefore, rotational power from the engine 2 is transmitted from the flywheel 3 to the rotary shaft 8 via the damper 6. With this, torque variations of the engine 2 are transmitted to the damper 6 via the flywheel 3 and absorbed by the damper 6, and therefore are not transmitted to the rotary shaft 8.

The engine 2 is disposed on one of opposite sides of the damper 6 (the same side of the damper 6 as the engine 2) in the axial direction C1 of the rotary shaft 8. The electric motor 4 is disposed on the other of the opposite sides of the damper 6 (the same side of the damper 6 as the driven machine 5) in the axial direction C1 of the rotary shaft 8. That is, the engine 2, the damper 6, and the electric motor 4 are arranged in this order in the axial direction C1 of the rotary shaft 8. In other words, the damper 6 is disposed between the engine 2 and the electric motor 4 in the axial direction C1 of the rotary shaft 8. The damper 6 and the rotor 41 of the electric motor 4 are arranged along the axial direction C1. This makes it possible to make the inner diameter of the rotor 41 smaller than when the damper 6 is disposed radially inside the rotor 41.

With the foregoing power transmission mechanism 1, upon driving of the engine 2, rotational power from the engine 2 is transmitted to the flywheel 3 via the crankshaft 2a to cause the flywheel 3 to rotate. Rotational power from the flywheel 3 is transmitted to the rotary shaft 8 via the damper 6 to cause the rotary shaft 8 to rotate. The rotation of the rotary shaft 8 drives the driven machine 5. Furthermore, the rotation of the rotary shaft 8 causes the rotor 41 to rotate, causing the electric motor 4 to generate electricity. In such power transmission, torque variations of the engine 2 are absorbed by the damper 6 and therefore are not transmitted to the driven machine 5.

Upon driving of the electric motor 4 in addition to the driving of the engine 2, the rotor 41 rotates. The rotary shaft 8 rotates with the rotation of the rotor 41 to drive the driven machine 5. With this, the rotational power from the engine 2 is assisted by the rotational power from the electric motor 4.

As illustrated in FIGS. 1 and 2, the power transmission mechanism 1 includes a rotation detector 12.

The rotation detector 12 detects the phase of rotation of the rotor 41. The rotation detector 12 can be, for example, a resolver, an encoder, and/or the like, but is preferably a resolver which has high environmental resistance and which detects angle with high accuracy. The rotation detector 12 is disposed in the interior space of the support cylinder 21. Specifically, the rotation detector 12 is disposed between the inner circumferential surface of the support cylinder 21 and the outer circumferential surface of the rotor boss 13.

As illustrated in FIG. 1, the rotation detector 12 is connected to a controller 22. The controller 22 includes an inverter to control the electric motor 4 by means of vector control. The controller 22 is also connected to the engine 2, the electric motor 4, the driven machine 5, and/or the like. The controller 22 includes a CPU, memory(memories), and/or the like. The controller 22 controls the driving, stopping, rotation speed, and/or the like of the engine 2, the electric motor 4, the driven machine 5, and/or the like on the basis of control program(s) and/or the like stored in the memory(memories) and/or the like.

Similar to the electric motor 4, the rotation detector 12 is disposed on the other of the opposite sides of the damper 6 (the same side of the damper 6 as the driven machine 5) in the axial direction C1 of the rotary shaft 8. With this, the phase of rotation of the rotor 41 after the absorption of torque variations of the engine 2 by the damper 6 can be detected by the rotation detector 12. Therefore, variations in detection value detected by the rotation detector 12 are prevented or reduced, the control of the electric motor 4 based on the detection value can be performed with high accuracy, and the efficiency of the electric motor 4 improves.

The power transmission mechanism 1 for an electric motor 4 as has been discussed achieves the following effects.

A power transmission mechanism 1 for an electric motor 4 includes an engine 2 including a crankshaft 2a, a flywheel 3 connected to the crankshaft 2a, an electric motor 4 including a rotor 41 to rotate together with a rotary shaft 8, a damper 6 connected to the rotary shaft 8 and the flywheel 3, and a driven machine 5 to receive power from the engine 2 and/or the electric motor 4, wherein the damper 6 is disposed between the engine 2 and the electric motor 4 in an axial direction C1 of the rotary shaft 8.

With the configuration, since the damper 6 is disposed between the engine 2 and the electric motor 4 in the axial direction C1 of the rotary shaft 8 rotating together with the rotor 41 and is connected to the rotary shaft 8 and the flywheel 3, the camper 6 is capable of absorbing torque variations of the engine 2, and the outer diameter of the electric motor 4 can be reduced. Furthermore, since the damper 6 is connected to the flywheel 3, the length of the power train (dimension in the axial direction C) can be reduced.

The driven machine 5 is a transmission 5 to transmit power from the engine 2 to one or more wheels. The rotary shaft 8 serves also as an input shaft of the transmission 5.

The configuration eliminates the need for providing the rotary shaft of the rotor 41 and the input shaft of the transmission 5 independently of each other. This makes it possible to reduce parts count and reduce the size of the power transmission mechanism 1.

The power transmission mechanism 1 for the electric motor 4 further includes a rotation detector 12 to detect a phase of rotation of the rotor 41. The engine 2 is disposed on one of opposite sides of the damper 6 in the axial direction C1. The electric motor 4 and the rotation detector 12 are disposed on the other of the opposite sides of the damper 6 in the axial direction C1.

With the configuration, torque variations of the engine 2 are absorbed by the damper 6, and the phase of rotation of the rotor 41 of the electric motor 4 after the absorption of the torque variations can be detected with the rotation detector 12. With this, variations in detection value detected by the rotation detector 12 are prevented or reduced, the control of the electric motor 4 based on the detection value can be performed with high accuracy, and the efficiency of the electric motor 4 improves.

The power transmission mechanism 1 for the electric motor 4 further includes a bearing 9 which rotatably supports the rotary shaft 8. The rotary shaft 8 is provided, at an outer periphery thereof, with a torque transmitting part 10 to transmit rotational torque to the rotor 41. The torque transmitting part 10 includes one or more keys or one or more splines.

The configuration makes it possible to cause the rotary shaft 8 to rotate stably, and reliably transmit high rotational torque from the rotary shaft 8 to the rotor 41.

The power transmission mechanism 1 for the electric motor 4 further includes a flywheel housing 7 which houses the flywheel 3, and a transmission case 11 which is connected to the flywheel housing 7 and which houses the transmission 5. The electric motor 4 is housed in the transmission case 11. The rotary shaft 8 extends from an interior of the flywheel housing 7 to the interior of the transmission case 11.

The configuration makes it possible to reduce the length of the power train extending from the flywheel 3 to the transmission 5.

While the present invention has been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims.

### [REFERENCE SIGNS LIST]

- 1: Power transmission mechanism
- 2: Engine
- 2a: Crankshaft
- 3: Flywheel
- 3b: Recessed portion
- 3b1: First recessed portion
- 3b2: Second recessed portion
- 4: Electric motor
- 41: Rotor
- 5: Driven machine (transmission)
- 6: Damper
- 61: Inner section
- 62: Outer section
- 8: Rotary shaft
- 9: Bearing
- 10: Torque transmitting part
- 11: Transmission case
- 12: Rotation detector
- 13: Rotor boss
- 21: Support cylinder

## Claims

1. A power transmission mechanism (1) comprising:
an engine (2) including a crankshaft;
a flywheel (3) connected to the crankshaft;
an electric motor (4) including a rotor (41) to rotate together with a rotary shaft (8);
a damper (6) connected to the rotary shaft and the flywheel; and
a driven machine (5) to receive power from the engine and/or the electric motor, wherein
the damper (6) is disposed between the engine (2) and the electric motor (4) in an axial direction of the rotary shaft,
the driven machine is a transmission (5) to transmit power from the engine (2) to one or more wheels; and
the rotary shaft (8) serves also as an input shaft of the transmission, **characterized in that**
the rotary shaft (8) and the input shaft of the transmission (5) are composed of a single, identical shaft, and
one end portion of the rotary shaft (8) overlaps the flywheel (3) in the axial direction.

2. The power transmission mechanism according to claim 1, further comprising a rotation detector (12) to detect a phase of rotation of the rotor (41), wherein:
the engine (2) is disposed on one of opposite sides of the damper (6) in the axial direction; and
the electric motor (4) and the rotation detector (12) are disposed on the other of the opposite sides of the damper in the axial direction.

3. The power transmission mechanism according to claim 1 or 2, further comprising a bearing (9) which rotatably supports the rotary shaft (8), wherein:
the rotary shaft is provided, at an outer periphery thereof, with a torque transmitting part (10) to transmit rotational torque to the rotor; and
the torque transmitting part includes one or more keys or one or more splines.

4. The power transmission mechanism according to claim 1, further comprising:
a flywheel housing (7) which houses the flywheel (3);
a motor case (16) which is connected to the flywheel housing; and
a transmission case (11) which is connected to the motor case and which houses the transmission (5), wherein:
the electric motor (4) is housed such that the electric motor extends from an interior of the motor case to an interior of the transmission case; and
the rotary shaft (8) extends from an interior of the flywheel housing through the interior of the motor case to the interior of the transmission case.

5. The power transmission mechanism according to any one of claims 1 to 4, wherein:
an end surface of the flywheel (3) that faces the damper (6) is recessed toward an opposite end surface of the flywheel to have a recessed portion (3b); and
the damper (6) is disposed such that the damper is inserted in the recessed portion.

6. The power transmission mechanism according to claim 5, wherein:
the damper (6) includes an inner section (61) attached to the rotary shaft (8) and an outer section (62) attached to the flywheel (3);
the end surface of the flywheel is recessed in the form of a cylinder to have a first recessed portion (3b1), and the end surface of the first recessed portion is recessed in the form of a cylinder to have a second recessed portion (3b2);
the outer section (62) is disposed such that the outer section is inserted in the first recessed portion; and
the inner section is disposed such that the inner section is inserted in the second recessed portion.

7. The power transmission mechanism according to claim 4, wherein the damper (6) overlaps the flywheel housing (7) and the motor case (16) in the axial direction.

8. The power transmission mechanism according to claim 2, further comprising:
a bearing (9) which rotatably supports the rotary shaft (8); and
a support cylinder (21) which supports an outer circumferential surface of the bearing, wherein
the rotation detector (12) is disposed in an interior space of the support cylinder.

9. The power transmission mechanism according to claim 8, further comprising a rotor boss (13) having:
an outer circumferential surface (13a) having the rotor attached thereto; and
an inner circumferential surface (13b) fixed to the rotary shaft, wherein
the rotation detector (12) is disposed between an inner circumferential surface of the support cylinder and the outer circumferential surface of the rotor boss.

## Patentansprüche

1. Kraftübertragungsmechanismus (1), umfassend:
einen Motor (2), der eine Kurbelwelle umfasst;
ein Schwungrad (3), das mit der Kurbelwelle verbunden ist;
einen Elektromotor (4), der einen Rotor (41) umfasst, um sich zusammen mit einer Drehwelle (8) zu drehen;
einen Dämpfer (6), der mit der Drehwelle und dem Schwungrad verbunden ist; und
eine angetriebene Maschine (5), um Kraft von dem Motor und/oder dem Elektromotor zu empfangen, wobei
der Dämpfer (6) zwischen dem Motor (2) und dem Elektromotor (4) in einer axialen Richtung der Drehwelle angeordnet ist,
die angetriebene Maschine ein Antriebsstrang (5) ist, um Kraft von dem Motor (2) auf ein oder mehrere Räder zu übertragen; und
die Drehwelle (8) auch als Eingangswelle des Antriebsstrangs dient,
**dadurch gekennzeichnet, dass**
die Drehwelle (8) und die Eingangswelle des Antriebsstrangs (5) aus einer einzelnen, identischen Welle bestehen, und
sich ein Endabschnitt der Drehwelle (8) mit dem Schwungrad (3) in der axialen Richtung überlappt.

2. Kraftübertragungsmechanismus nach Anspruch 1, ferner umfassend einen Rotationsdetektor (12), um eine Rotationsphase des Rotors (41) zu detektieren, wobei:
der Motor (2) auf einer von gegenüberliegenden Seiten des Dämpfers (6) in der axialen Richtung angeordnet ist; und
der Elektromotor (4) und der Rotationsdetektor (12) auf der anderen der gegenüberliegenden Seiten des Dämpfers in der axialen Richtung angeordnet sind.

3. Kraftübertragungsmechanismus nach Anspruch 1 oder 2, ferner umfassend ein Lager (9), das die Drehwelle (8) drehbar trägt, wobei:
die Drehwelle an einer äußeren Peripherie derselben mit einem drehmomentübertragenden Teil (10) versehen ist, um ein Drehmoment auf den Rotor zu übertragen; und
das drehmomentübertragende Teil einen oder mehrere Keile oder eine oder mehrere Keilnuten umfasst.

4. Kraftübertragungsmechanismus nach Anspruch 1, ferner umfassend:
ein Schwungradgehäuse (7), welches das Schwungrad (3) unterbringt;
ein Motorgehäuse (16), das mit dem Schwungradgehäuse verbunden ist; und
ein Antriebsstranggehäuse (11), das mit dem Motorgehäuse verbunden ist und das den Antriebsstrang (5) unterbringt, wobei:
der Elektromotor (4) derart untergebracht ist, dass sich der Elektromotor von einem Inneren des Motorgehäuses bis zu einem Inneren des Antriebsstranggehäuses erstreckt; und
sich die Drehwelle (8) von einem Inneren des Schwungradgehäuses durch das Innere des Motorgehäuses hindurch bis zu dem Inneren des Antriebsstranggehäuses erstreckt.

5. Kraftübertragungsmechanismus nach einem der Ansprüche 1 bis 4, wobei:
eine Endfläche des Schwungrads (3), die dem Dämpfer (6) gegenübersteht, in Richtung auf eine gegenüberliegende Endfläche des Schwungrads vertieft ist, um einen vertieften Abschnitt (3b) aufzuweisen; und
der Dämpfer (6) derart angeordnet ist, dass der Dämpfer in den vertieften Abschnitt eingefügt ist.

6. Kraftübertragungsmechanismus nach Anspruch 5, wobei:
der Dämpfer (6) ein inneres Teilstück (61), das an der Drehwelle (8) angebracht ist, und ein äußeres Teilstück (62), das an dem Schwungrad (3) angebracht ist, umfasst;
die Endfläche des Schwungrads in der Form eines Zylinders vertieft ist, um einen ersten vertieften Abschnitt (3b1) aufzuweisen, und die Endfläche des ersten vertieften Abschnitts in der Form eines Zylinders vertieft ist, um einen zweiten vertieften Abschnitt (3b2) aufzuweisen;
das äußere Teilstück (62) derart angeordnet ist, dass das äußere Teilstück in den ersten vertieften Abschnitt eingefügt ist; und
das innere Teilstück derart angeordnet ist, dass das innere Teilstück in den zweiten vertieften Abschnitt eingefügt ist.

7. Kraftübertragungsmechanismus nach Anspruch 4, wobei sich der Dämpfer (6) mit dem Schwungradgehäuse (7) und dem Motorgehäuse (16) in der axialen Richtung überlappt.

8. Kraftübertragungsmechanismus nach Anspruch 2, ferner umfassend:
ein Lager (9), das die Drehwelle (8) drehbar trägt; und
einen Trägerzylinder (21), der eine äußere Umfangsfläche des Lagers trägt, wobei
der Rotationsdetektor (12) in einem inneren Raum des Trägerzylinders angeordnet ist.

9. Kraftübertragungsmechanismus nach Anspruch 8, ferner umfassend eine Rotornabe (13) mit:
einer äußeren Umfangsfläche (13a), an welcher der Rotor angebracht ist; und
einer inneren Umfangsfläche (13b), die an der Drehwelle befestigt ist, wobei
der Rotationsdetektor (12) zwischen einer inneren Umfangsfläche des Trägerzylinders und der äußeren Umfangsfläche der Rotornabe angeordnet ist.

## Revendications

1. Mécanisme de transmission de puissance (1) comprenant :
un moteur (2) comprenant un vilebrequin ;
un volant (3) raccordé au vilebrequin ;
un moteur électrique (4) comprenant un rotor (41) pour tourner conjointement avec un arbre de rotation (8) ;
un amortisseur (6) raccordé à l'arbre de rotation et au volant ; et
une machine entraînée (5) pour recevoir la puissance du moteur et/ou du moteur électrique, dans lequel :
l'amortisseur (6) est disposé entre le moteur (2) et le moteur électrique (4) dans une direction axiale de l'arbre de rotation,
la machine entraînée est une transmission (5) pour transmettre la puissance du moteur (2) à une ou plusieurs roues ; et
l'arbre de rotation (8) sert également d'arbre d'entrée de la transmission, **caractérisé en ce que** :
l'arbre de rotation (8) et l'arbre d'entrée de la transmission (5) sont composés d'un seul arbre identique, et
une partie d'extrémité de l'arbre de rotation (8) recouvre le volant (3) dans la direction axiale.

2. Mécanisme de transmission de puissance selon la revendication 1, comprenant en outre un détecteur de rotation (12) destiné à détecter une phase de rotation du rotor (41), dans lequel :
le moteur (2) est disposé sur l'un des côtés opposés de l'amortisseur (6) dans la direction axiale ; et
le moteur électrique (4) et le détecteur de rotation (12) sont disposés sur l'autre des côtés opposés de l'amortisseur dans la direction axiale.

3. Mécanisme de transmission de puissance selon la revendication 1 ou 2, comprenant en outre un palier (9) qui supporte, de manière rotative l'arbre de rotation (8), dans lequel :
l'arbre de rotation est prévu, au niveau de sa périphérie externe, avec une partie de transmission de couple (10) destinée à transmettre le couple de rotation au rotor ; et
la partie de transmission de couple comprend une ou plusieurs clavettes ou une ou plusieurs cannelures.

4. Mécanisme de transmission de puissance selon la revendication 1, comprenant en outre :
un boîtier de volant (7) qui loge le volant (3) ;
un carter de moteur (16) qui est raccordé au boîtier de volant ; et
un carter de transmission (11) qui est raccordé au carter de moteur et qui loge la transmission (5) ; dans lequel :
le moteur électrique (4) est logé de sorte que le moteur électrique s'étend depuis un intérieur du carter de moteur à un intérieur du carter de transmission ; et
l'arbre de rotation (8) s'étend à partir d'un intérieur du boîtier de volant par le biais de l'intérieur du carter de moteur jusqu'à l'intérieur du carter de transmission.

5. Mécanisme de transmission de puissance selon l'une quelconque des revendications 1 à 4, dans lequel :
une surface d'extrémité du volant (3) qui fait face à l'amortisseur (6) est évidée vers une surface d'extrémité opposée du volant pour avoir une partie évidée (3b) ; et
l'amortisseur (6) est disposé de sorte que l'amortisseur est inséré dans la partie évidée.

6. Mécanisme de transmission de puissance selon la revendication 5, dans lequel :
l'amortisseur (6) comprend une section interne (61) fixée à l'arbre de rotation (8) et une section externe (62) fixée au volant (3) ;
la surface d'extrémité du volant est évidée sous la forme d'un cylindre pour avoir une première partie évidée (3b1), et la surface d'extrémité de la première partie évidée est évidée sous la forme d'un cylindre pour avoir une deuxième partie évidée (3b2) ;
la section externe (62) est disposée de sorte que la section externe est insérée dans la première partie évidée ; et
la section interne est disposée de sorte que la section interne est insérée dans la deuxième partie évidée.

7. Mécanisme de transmission de puissance selon la revendication 4, dans lequel l'amortisseur (6) recouvre le boîtier de volant (7) et le carter de moteur (16) dans la direction axiale.

8. Mécanisme de transmission de puissance selon la revendication 2, comprenant en outre :
un palier (9) qui supporte, de manière rotative, l'arbre de rotation (8) ; et
un cylindre de support (21) qui supporte une surface circonférentielle externe du palier, dans lequel :
le détecteur de rotation (12) est disposé dans un espace intérieur du cylindre de support.

9. Mécanisme de transmission de puissance selon la revendication 8, comprenant en outre un bossage de rotor (13) ayant :
une surface circonférentielle externe (13a) ayant le rotor fixé à cette dernière ; et
une surface circonférentielle interne (13b) fixée à l'arbre de rotation, dans lequel :
le détecteur de rotation (12) est disposé entre une surface circonférentielle interne du cylindre de support et la surface circonférentielle externe du bossage de rotor.
